Europäisches Patentamt

(19) European Patent Office

Office européen des brevets

(11) Veröffentlichungsnummer: **0 156 273**
**A2**

(12) **EUROPÄISCHE PATENTANMELDUNG**

(21) Anmeldenummer: 85103083.3

(22) Anmeldetag: 16.03.85

(51) Int. Cl.⁴: **A 61 C 13/00**
**B 22 C 9/04**

(30) Priorität: 17.03.84 DE 3409865

(43) Veröffentlichungstag der Anmeldung:
02.10.85 Patentblatt 85/40

(84) Benannte Vertragsstaaten:
AT CH DE FR GB IT LI

(71) Anmelder: Renfert GmbH & Co.
Weiherstrasse 6
D-7700 Singen/Htwl.(DE)

(72) Erfinder: Rieger, Klaus Ulfert
Kornblumenweg 39
D-7709 Hilzingen(DE)

(74) Vertreter: Hiebsch, Gerhard F., Dipl.-Ing.
Erzbergerstrasse 5A Postfach 464
D-7700 Singen 1(DE)

(54) **Hilfsmittel zum Herstellen eines Rasters aus Gussmetall sowie Verwendung des Hilfsmittels und Verfahren dazu.**

(57) Hilfsmittel zum Herstellen eines Rasters aus Gußmetall, welches auf ein Zahnteil zur Retention eines daran festzulegenden Körpers aufgebracht wird sollen so ausgebildet werden, daß sie problemlos anzuwenden sind und die hergestellten Retentionen ein Höchstmaß an Verbundfähigkeit anbieten, um der aufzubringenden Verblendung ausreichend dauerhaften Halt zu bieten.

Hierzu dient einerseits ein Gitter, welches als schmiegsam nachgiebiges Gewebe aus Kett- und Schußfäden (11, 12) eines Durchmessers (e,d) von weniger als 0,3 mm mit selbstklebender Beschichtung ausgebildet und auf einer Trägerfolie (20) abziehbar festgelegt ist. Anderseits löst die Aufgabe ein Gitter, welches als ein schmiegsames und nachgiebiges Kunststoffnetz (40) aus Kett- und Schußfäden (41,42) von 100 $\mu$m Durchmesser ($e_1$, $t_1$) mit einer Offenfläche von etwa 50% Flächenanteil ausgebildet ist, wobei das schmiegsame sowie nachgiebige Kunststoffnetz auf einem blattartigen Träger (46) festgelegt ist.

Fig.1

# DIPL.-ING. GERHARD F. HIEBSCH 0156273

## PATENTANWALT
### EUROPEAN PATENT ATTORNEY

E. & H. Renfert
================

Weiherstr. 6
=============

7700 Singen
===========

D-7700 Singen 1
Erzbergerstraße 5a
Telegr./Cables.
Bodenseepatent
Telex 793850
Telefon (07731) 63075
                63076

Mein Zeichen R-143/EPA
My file

I/ke

Datum / Date

Hilfsmittel zum Herstellen eines Rasters aus
Gußmetall sowie Verwendung des Hilfsmittels
und Verfahren dazu

Die Erfindung betrifft ein Hilfsmittel zum Herstellen eines Rasters aus Gußmetall, welches auf einen Zahnteil zur Retention eines daran festzulegenden Körpers aufgebracht wird, in Form eines Gitters mit sich kreuzenden Profilen geringen Durchmessers aus einem rückstandslos verbrennenden Werkstoff. Darüber hinaus erfaßt die Erfindung die Verwendung dieses Hilfsmittels sowie ein Verfahren dazu.

Ein derartiges Hilfsmittel zur Bildung von Retentionsrippen aus Metallguß auf dem Gebiete der Zahntechnik ist seit langem als blattartiger flexibler Gitterkörper mit sich kreuzenden Strängen aus rückstandsfrei verbrennendem Wachs bekannt. Dieses Gitter wird auf der mit jenen Retentionen zu versehenden Fläche in eine Formmasse eingebettet und verbrannt; hierdurch entstehen Gußkanäle für ein Gußmetall, welches nach seinem Erstarren der Form jenes Platzhalters aus Wachsmaterial entspricht.

-2-

Sowohl die üblichen genannten Gitter aus Wachs als auch ansonsten bekannte Retentionsperlen oder Retentionskristalle haben sich in der Handhabung besonders bei verhältnismäßig kleinen Flächen als mangelhaft erwiesen. So biegen sich beispielsweise die Wachsgitter in der Art von Scherblättern üblicher Trockenrasierapparate und trachten, in ihre ebene Ruhelage zurückzukehren, was ein Wachsgitter od. dgl. erhebliche Befestigungsprobleme mit sich bringt.

Angesichts dieser Gegebenheiten hat sich der Erfinder das Ziel gesetzt, ein Hilfsmittel der eingangs erwähnten Art zu schaffen, welches die erwähnten Mängel beseitigt und problemlos anzuwenden ist. Die dank des Hilfsmittels hergestellten Retentionen sollen ein Höchstmaß an Verbundfähigkeit anbieten, um der aufzubringenden Verblendung ausreichend dauerhaften Halt zu bieten.

Zur Lösung dieser Aufgabe führt, daß das Gitter als schmiegsam nachgiebiges Gewebe aus Kett- und Schußfäden eines Durchmessers von weniger als 0,3 mm mit selbstklebender Beschichtung ausgebildet und auf einer Trägerfolie abziehbar festgelegt ist. Darüber hinaus soll dieses Gewebe zwischen der Trägerfolie und einer Schutzfolie sandwichartig vorgesehen sein.

Die Eigenschaften des erfindungsgemäßen Gewebes entsprechen denen textiler Stoffe; sie sind -- mangels Rückstellkraft -- in der Lage, sich an die von der Gegenfläche angebotenen Kavernen und Anformungen anzuschmiegen und an diesen dank der Selbstklebeeigenschaft problemlos zu haften, ohne daß es eines zusätzlichen Heftvorganges bedürfte.

Darüber hinaus führt die Selbstklebeeigenschaft des Hilfsmittels zu einem gleichmäßigen Verbund, wohingegen die bekannten Gitter nur stellenweise festgelegt sind, ihre Befestigung häufig nur am Rande erfolgt. Ein Unterwandern solcher Gitter durch die Einbettmasse ist evident. Darüber hinaus werden alle Flächenabschnitte, die nicht vom erfindungsgemäßen Hilfsmittel bedeckt sind, von jeder Art Kleber freigehalten.

So liegt im Rahmen dieser Erfindung die Verwendung des beschriebenen Hilfsmittels als Platzhalter von in einer Einbettmasse herzustellenden Formkanälen für ein Retentionsraster auf einer Zahnkrone od. dgl., welche mit einer Verblendung aus Kunststoff oder Porzellan versehen werden soll.

Das Aufbringen des erfindungsgemäßen Gewebes erfolgt bei einem dazu bevorzugten Verfahren dadurch, daß eine zu verblendende Fläche mit einer Hilfsmasse bestrichen wird, welche trocknet. Auf diese wird dann das selbstklebende Hilfsmittel aufgedrückt, wonach es in eine Einbettmasse eingebettet und anschließend samt der aus jener Hilfsmasse entstandenen Schicht verbrannt wird.

Nunmehr wird das Gußmetall, welches dank der aus der Hilfsmasse entstandenen Schicht von allen Seiten her in die Gußkanäle einströmen kann, in die so hergestellte Gießform eingebracht. Nach dem Erkalten des Gußmetalles wird bevorzugt dessen Oberfläche auf dem Wege des Sandstrahlens behandelt, um -- über die

·· **0156273** ·

Retentionsfähigkeit der entstandenden Gußrippen hinaus
-- Kavernen zum "Einzapfen" der Verblendung zu erhalten.

Es ist an sich bekannt, derartige Retentionskavernen
durch Sandstrahlen herzustellen, jedoch hat es sich
im Rahmen der vorliegenden Erfindung erwiesen, daß eine
Kombination von mit dem erfindungsgemäßen Hilfsmittel
hergestellten Retentionen und in diesen zusätzlich vorgesehenen Sandstrahlkavernen zu einer überraschend hohen
Haltekraft führt.

Dank der beschriebenen besonderen Schmiegsamkeit des
erfindungsgemäßen Gewebes können problemlos Retentionen
auf der gesamten labialen oder bukkalen Fläche von
Zähnen hergestellt werden und zwar in einer -- gegenüber
dem Stande der Technik -- um die Hälfte verkürzten
Verarbeitungszeit. Ein weiterer Vorteil ist darin zu
sehen, daß die Retentionsrippen bis in die Randzonen
der zu verblendenden Fläche zu reichen vermögen.

Der Erfinder bietet zudem noch ein anderes Hilfsmittel
an, welches jedoch nicht für die Verblendung von Zahnkronen dient, sondern es ermöglicht, in besonders
günstiger Weise Brücken zwischen zwei lebenden Zähnen
festzulegen. Hierzu dient ein schmiegsames und nachgiebiges Kunststoffnetz aus Kett- und Schußfäden von
etwa 100 µm Durchmesser mit einer Offenfläche von etwa
50 % Flächenanteil, wobei das schmiegsame sowie nachgiebige Kunststoffnetz auf einem blattartigen Träger
festgelegt ist. Nach einem weiteren Merkmal der Erfindung kann die Offenfläche des Kunststoffnetzes
mehr als 50 % betragen, auch können die Durchmesser
von Kett- und Schußfaden unter 100 µm, bevorzugt
zwischen 25 und 100 µm, liegen. Wie bereits angedeutet,

ist als erfindungsgemäße Verwendung dieses Hilfsmittels das Platzhalten für die Herstellung von
Gußkanälen für ein Retentionsraster auf einem eine
Zahnlücke flankierenden Brückenzahn vorgesehen.

Vorteilhafterweise soll zur Erhöhung der Schmiegsamkeit der Kettfaden aus einer Hauptfaser und wenigstens einer Nebenfaser bestehen, wobei die durch den
Durchmesser des Kettfadens bestimmte Querschnittsfläche vom Durchmesser des Hauptfadens von 50 bis
100 µm und dem Durchmesser des Nebenfadens von etwa
60 µm bestimmt wird.

Insgesamt wird durch das letztgenannte Hilfsmittel
die Bearbeitung von Brücken erheblich erleichtert;
das entstehende Retentionsnetz aus Gußmetall ist besonders kleinmaßig, der erwähnte Platzhalter dennoch
sehreinfach zu handhaben.

Weitere Vorteile, Merkmale und Einzelheiten der
Erfindung ergeben sich aus der nachfolgenden Beschreibung zweier unterschiedlicher Hilfsmittel sowie
aus der Zeichnung; diese zeigt in

Fig. 1: eine Schrägsicht auf einen Teil eines erfindungsgemäßen Hilfsmittels;

fig. 2: das Hilfsmittel nach Fig. 1 während seines
Aufbringvorgangs in Draufsicht:

Fig. 3: eine der Fig. 2 entsprechende Wiedergabe
eines Zahnteiles;

Fig. 4: eine Schrägsicht auf einen Teil eines anderen Hilfsmittels;

Fig. 5: eine schematisierte Skizze einer Anwendungsform zu Fig. 4.

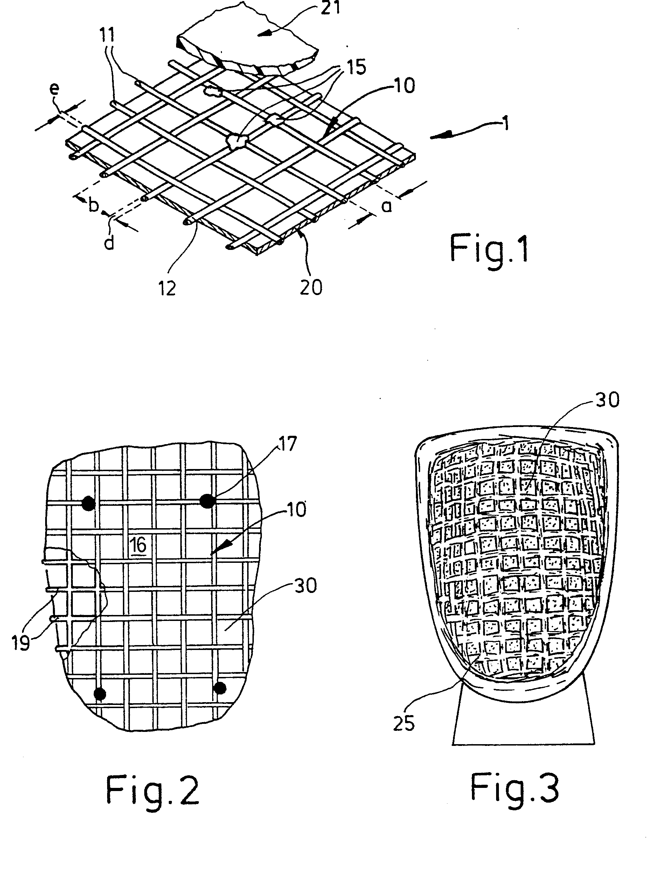

Fig. 1 läßt ein dünnes und sehr nachgiebiges Gewebe
10 aus Kettfäden 11 und Schußfäden 12 erkennen, welches auf einer Trägerfolie 20 abziehbar festgelegt
ist. Das Gewebe 10 ist insgesamt aus rückstandsfrei
verbrennendem Werkstoff hergestellt, bevorzugt aus
entsprechenden Kunststoffäden. Es ist sehr nachgiebig
-- also ohne Flexibilität bedingende Rückstellkräfte
-- und schmiegt sich somit auch faltenreichen Oberflächen mühelos an.

Die Durchmesser d bzw. e der Schußfäden 12 und der
Kettfäden 11 messen etwa 0,25 mm. Das Gewebe 10 ist
mit einer selbstklebenden Beschichtung versehen,

0156273

welche aus Gründen der Übersichtlichkeit in der
Zeichnung vernachlässigt ist - lediglich bei 15
sind knotenartige Erweiterungen der Beschichtung
zu erkennen, um anzudeuten, daß auch von den Kett-
oder Schußfäden 11,12 abstehende Fasern die selbstklebende Beschichtung aufweisen. Das Gewebe 10 ist
von einer Schutzfolie 21 abgedeckt, welche vor der
Adaption des Gewebes 10 abgezogen wird.

Eine zu verblendende Fläche 30 eines Zahnes wird
mit einer Hilfsmasse bestrichen, welche als Schicht
16 antrocknet und nach der weiter unten beschriebenen
Aufbringen des Gewebes 10 eine Gußkanalverbindung zwischen jener Fläche 30 und dem Gewebe 10 bildet.

Nach dem Auftragen der Hilfsmasse 16 wird ein entsprechender Abschnitt des Verbundblattes 1 aus dem
beidseits mit den Folien 20,21 versehenen Gewebe
10 in entsprechender Größe grob zugeschnitten, die
Schutzfolie bzw. ein Schutzpapier 21 hochgeklappt
und das Gewebe 10 mit einer Pinzette erfaßt. Nunmehr
kann  Schutzpapier 21 und Trägerfolie 20 abgelöst sowie das Gewebe 10 cervical positioniert werden. Nach
dem Andrücken des Gewebes 10 an die Fläche 30 wird
deren genaue Form nachgeschnitten und dann jenes
Gewebe 10 an beispielsweise vier Punkten 17 (Fig.2)
-- falls erforderlich -- zusätzlich verwachst.

Nach dem sorgfältigen Aufdrücken des dank seiner
Schmiegsamkeit  überall der Fläche 30 anliegenden
und mittels der Selbstklebeeigenschaft problemlos
haftenden Gewebes wird Einbettmasse eingefüllt. Bei
besonders geringer Auftragshöhe können die Durchmesser e,d der Kettfäden 11 bzw. der Schußfäden 12
auf etwa 0,1 mm reduziert werden.

Das Gewebe 10 ist Platzhalter für nach einem -- Gewebe 10 und Schicht 16 erfassenden -- Ausbrennvorgang verbleibende Gußkanäle 19 zum Herstellen eines Retentionsrasters 25 auf der zu verblendenden Fläche 30.

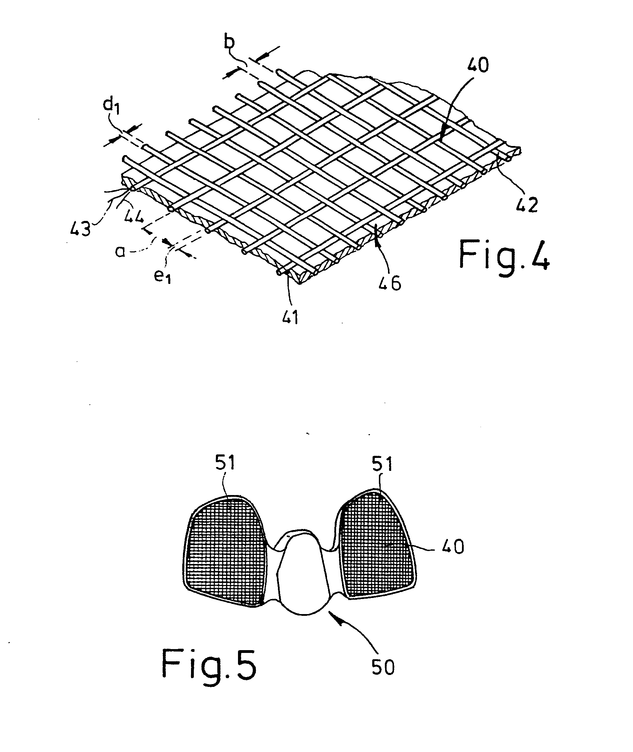

Von dem beschriebenen Gewebe 10 unterscheidet sich ein ebenfalls dünnes und sehr nachgiebiges Kunststoffnetz 40 nach Fig. 4 sowohl bezüglich seiner Größenverhältnisse als auch im Hinblick auf das Anwendungsgebiet erheblich: während das Gewebe 10 für die Verblendung eines Zahnes herangezogen wird, dient das Kunststoffnetz 40 zur Herstellung von Retentionen an gegossenen Flügelelementen, um mittels eines verbindenden Komposits eine dauerhafte Verbindung mit dem Zahnschmelz eines -- in der Zeichnung aus Gründen der Übersichtlichkeit nicht wiedergegebenen -- natürlichen Zahnes beidseits einer Brücke 50 zu erzielen.

Dieses Kunststoffnetz 40 ist fest mit einem plattenförmigen Kunststoffträger 46 verbunden.

In Fig. 5 ist ein Anwendungsbeispiel für das Kunststoffnetz 40 mit einer Brücke 50 zwischen zwei -- jene Flügelelemente darstellenden -- die Brücke 50 flankierenden Zahnankerplatten 51 dargestellt.

Die Durchmesser $d_1$ und $e_1$ der Kettfäden 41 bzw. Schußfäden 42 liegen hier im Mikron-Bereich. So mißt der Durchmesser $d_1$ von Schußfaden 42 beispielsweise 100 Mikrometer (1 µm = $10^{-6}$m). Die Kettfäden 41 bestehen aus einer Hauptfaser 43 von beispielsweise 100 µm und wenigstens einer Nebenfaser 44 von beispielsweise 60 µm. Auch können Haupt- und Nebenfaser 43,44 jeweils 60 µm messen, wobei sich ihre Querschnitte addieren.

0156273

Der Anteil der -- durch die Maschenweiten a,b bestimmten -- Offenfläche beträgt hier etwa 50 % was einer
Fadenzahl von etwa 25 in Richtung der Kettfäden 41
bzw. der Schußfäden 42 bei 10 mm Koordinatenlänge entspricht. Die Maschenweite liegt hier durchschnittlich
bei 300 µm. Mit abnehmenden Durchmessern $e_1$, $d_1$ der
Kettfäden 41 und/oder Schußfäden 42 steigt der Anteil
der Offenfläche über 50 %.

Für ihre Anwendungsbereiche sind Gewebe 10 und Kunststoffnetz 40 nicht austauschbar. da letzteres außergewöhnlich kleinmäßig, das Gewebe 10 jedoch vor allem
leicht zu handhaben sein muß.

Die Form der Maschenfelder von Gewebe 10 und Kunststoffnetz 40 können im Rahmen der Erfindung von der
bevorzugt quadratischen Konfiguration abweichen; die
Erfindung umfaßt auch andere mögliche Maschenformen.

A N S P R Ü C H E
===============================

1. Hilfsmittel zum Herstellen eines Rasters aus Gußmetall, welches auf einen Zahnteil zur Retention
   eines daran festzulegenden Körpers aufgebracht
   wird, in Form eines Gitters mit sich kreuzenden
   Profilen geringen Durchmessers aus einem rückstandslos verbrennenden Werkstoff,

   dadurch gekennzeichnet,

   daß das Gitter als schmiegsam nachgiebiges Gewebe
   aus Kett- und Schußfäden (11,12) eines Durchmessers
   (e,d) von weniger als 0,3 mm mit selbstklebender Beschichtung ausgebildet und auf einer Trägerfolie (20)
   abziehbar festgelegt ist.

2. Hilfsmittel  zum Herstellen eines Rasters aus Gußmetall, welches auf einen Zahnteil zur Retention
   eines daran festzulegenden Körpers aufgebracht wird,
   in Form eines Gitters mit sich kreuzenden Profilen
   geringen Durchmessers aus einem rückstandslos verbrennenden Kunststoff, dadurch gekennzeichnet, daß
   das Gitter als ein schmiegsames und nachgiebiges
   Kunststoffnetz (40) aus Kett- und Schußfäden (41,42)
   von etwa 100 um Durchmesser ($e_1, d_1$) mit einer Offenfläche von etwa 50 % Flächenanteil ausgebildet ist,
   wobei das schmiegsame sowie nachgiebige Kunststoffnetz auf einen blattartigen Träger (46) festgelegt ist.

                                              -A 2-

BAD ORIGINAL

3. Hilfsmittel nach Anspruch 1, dadurch gekennzeichnet, daß das Gewebe (10) zwischen der Trägerfolie (20) und einer Schutzfolie (21) sandwichartig vorgesehen ist.

4. Hilfsmittel nach Anspruch 2, dadurch gekennzeichnet, daß die Offenfläche des Kunststoffnetzes (40) mehr als 50 % beträgt und die Durchmesser $(e_1, d_1)$ von Kett- und Schußfaden (41,42) unter 100 $\mu$m, bevorzugt zwischen 25 und 100 $\mu$m, liegen.

5. Hilfsmittel nach Anspruch 2, dadurch gekennzeichnet, daß der Kettfaden (41) aus einer Hauptfaser (43) und wenigstens einer Nebenfaser (44) besteht.

6. Hilfsmittel nach Anspruch 5, dadurch gekennzeichnet, daß die durch den Durchmesser $(e_1)$ des Kettfadens (41) bestimmte Querschnittsfläche vom Durchmesser des Hauptfadens (43) von 50 bis 100 $\mu$m und dem Durchmesser des Nebenfadens (44) von etwa 60 $\mu$m bestimmt ist.

7. Verwendung des Hilfsmittels nach Anspruch 1 und/oder 3 als Platzhalter für in einer Einbettmasse herzustellende Formkanäle für ein Retentionsraster auf einer Zahnfläche.

8. Verwendung des Hilfsmittels nach Anspruch 2 und/oder 4 bis 6 als Platzhalter für die Herstellung von Gußkanälen für ein Retentionsraster auf einem eine Zahnlücke flankierenden Brückenzahn.

9. Verfahren zum Herstellen von Retentionen aus Gußwerkstoff auf dentalen Flächen für eine dentale
Verblendung unter Verwendung des Hilfsmittels nach
Anspruch 1 und/oder 3, dadurch gekennzeichnet, daß
die zu verblendende Fläche mit einer trocknenden
Hilfsmasse bestrichen sowie auf diese das Hilfsmittel selbstklebend aufgedrückt wird, wonach das
Hilfsmittel in eine Einbettmasse eingebettet und
anschließend samt der aus jener Hilfsmasse entstandenen Schicht verbrannt wird.

10. Verfahren nach Anspruch 9, dadurch gekennzeichnet,
daß nach dem Erkalten des in die aus dem Hilfsmittel entstandener Gußkanäle eingeführten Gußmetalls dessen Oberfläche auf dem Wege des Sandstrahlens mit Kavernen versehen wird.

Fig.1

Fig.2

Fig.3

Fig.4

Fig.5